# EUROPÄISCHE PATENTSCHRIFT

(11) **EP 3 850 320 B1**
(45) Veröffentlichungstag und Bekanntmachung des Hinweises auf die Patenterteilung: **19.10.2022**
(21) Anmeldenummer: 19752971.2
(22) Anmeldetag: 31.07.2019
(51) Int. Cl.: G01K 1/14

(54) **VORRICHTUNG ZUM MESSEN DER TEMPERATUR IN DEM INNENRAUM EINES FAHRZEUGS**
DEVICE FOR MEASURING THE TEMPERATURE IN THE INTERIOR OF A VEHICLE
DISPOSITIF POUR LA MESURE DE LA TEMPÉRATURE DANS L'ESPACE INTÉRIEUR D'UN VÉHICULE

(30) Priorität: 11.09.2018 DE 102018122164
(43) Veröffentlichungstag der Anmeldung: 21.07.2021
(73) Patentinhaber: Behr-Hella Thermocontrol GmbH, 59557 Lippstadt (DE)
(72) Erfinder: KLEINE-HOLLENHORST, Holger, Lippstadt 59557 (DE)
(74) Vertreter: dompatent von Kreisler Selting Werner - Partnerschaft von Patent- und Rechtsanwälten mbB
(86) Internationale Anmeldenummer: PCT/EP2019/070591
(87) Internationale Veröffentlichungsnummer: WO 2020/052857

(56) Entgegenhaltungen:
- DE-A1-102006 023 438
- DE-A1-102016 010 455
- US-A- 5 117 744
- US-B2- 8 246 246

## Beschreibung

Die Erfindung betrifft eine Vorrichtung zum Messen der Temperatur in dem Innenraum eines Fahrzeugs.

Zur automatischen Regelung der Innenraumtemperatur in einem Fahrzeug bedarf es der Erfassung der Ist-Temperatur im Fahrzeuginnenraum bzw. einer Messgröße, die den Istwert der Innenraumtemperatur repräsentiert. Der Istwert wird mit einem vorgegebenen Sollwert für die Fahrzeuginnenraumtemperatur verglichen. Die Abweichung beider Werte wird mit einem Regler ausgeregelt.

Die Erfassung der Fahrzeuginnenraumtemperatur kann mittels eines Innenraumtemperatursensors erfolgen, der einem Luftstrom ausgesetzt ist, welcher mittels eines Ventilators (Belüftungsmotor) aus dem Innenraum des Fahrzeugs angesaugt und an dem Innenraumtemperatursensor vorbeigeführt wird. Derartige sogenannte belüftete Innenraumtemperatursensoren werden aber bereits seit geraumer Zeit durch "unbelüftete" Innenraumtemperaturerfassungssysteme ersetzt. Ein unbelüfteter Innenraumtemperatursensor ist typischerweise in einem Sensorgehäuse angeordnet, das thermisch gut zum Fahrzeuginnenraum gekoppelt ist. Beispiele für unbelüftete Innenraumtemperatursensoren sind in DE-C-100 49 979, DE-B-103 12 077, DE-A-10 2007 008 744, DE-B-10 2008 064 011, DE-A-10 2010 015 657, DE-A-10 2016 010 455, DE-U-20 2004 002 427, EP-B-1 457 365 und US-A-2006/0022844 beschrieben.

Eine Vorrichtung zum Messen der Temperatur im Innenraum eines Fahrzeugs nach dem Oberbegriff des Anspruchs 1 ist aus US-B-8 246 246 bekannt.

Bei der Montage von Bauteilen bzw. Bauteilkomponenten in der Automobilindustrie ist es wünschenswert, diese Bauteile bzw. Komponenten mittels Clips- bzw. Einschnapp- oder Verrastungskonstruktionen zu montieren. Auf Grund von Bauteiltoleranzen kann es hier allerdings zu unerwünschten Fehlpositionierungen im verclipsten bzw. ein- oder verrasteten Einbauzustand kommen.

Aufgabe der Erfindung ist es, eine Vorrichtung zum Messen der Temperatur in dem Innenraum eines Fahrzeugs anzugeben, die im montierten Zustand verrastet und deren Montageposition im Wesentlichen toleranzunabhängig definiert ist.

Zur Lösung dieser Aufgabe wird mit der Erfindung eine Vorrichtung zum Messen der Temperatur in dem Innenraum eines Fahrzeugs vorgeschlagen, die versehen ist mit den Merkmalen des Anspruchs 1; einzelne Ausgestaltungen der Erfindung sind Gegenstand der Unteransprüche.

Die erfindungsgemäße Vorrichtung ist mit einem Steckgehäuse versehen, das zum Einstecken in eine Aufnahmeeinrichtung an der Rückseite eines an den Innenraum angrenzenden Abdeckelements dient. Bei dem Abdeckelement kann es sich beispielsweise um einen Teil einer Instrumententafel oder einer Mittelkonsole oder eines sogenannten Dachknotens eines Fahrzeugs handeln. An der Rückseite des Abdeckelements befindet sich ein Aufnahmeraum der Aufnahmeeinrichtung, von dem aus sich eine Durchgangsöffnung im Abdeckelement zu dessen Vorderseite erstreckt. Das Steckgehäuse weist ein Einsteckende auf, das in Einsteckrichtung in die Aufnahmeeinrichtung eingeführt wird und damit der Aufnahme durch die Aufnahmeeinrichtung dient. Das Steckgehäuse und die Aufnahmeeinrichtung sind rastend miteinander verbindbar. Zu diesem Zweck weist die erfindungsgemäße Vorrichtung eine entsprechende Rasteinrichtung auf, die beispielsweise Rastnasen und Rastvertiefungen umfasst, wobei zumindest eines dieser beiden miteinander zusammenwirkenden Komponenten der Rasteinrichtung elastisch ausgebildet ist.

Am und/oder im Einsteckende des Steckgehäuses befindet sich ein Innenraumtemperatursensor, der mit dem Einsteckende des Steckgehäuses fluchtet oder über das Einsteckende des Steckgehäuses übersteht.

Erfindungsgemäß ist entweder am Steckgehäuse bzw. an dessen Einsteckende oder an der Aufnahmeeinrichtung bzw. dem Abdeckelement oder an jedem der zuvor genannten Komponenten eine Vorspanneinrichtung oder Teile einer Vorspanneinrichtung ausgebildet, durch die das Steckgehäuse von dem Abdeckelement weg gerichtet vorgespannt ist, wenn das Einsteckende des Steckgehäuses von der Aufnahmeeinrichtung aufgenommen und das Steckgehäuse mit der Aufnahmeeinrichtung verrastet ist. In diesem Zustand befindet sich der Innenraumtemperatursensor in der Durchgangsöffnung des Abdeckelements und ist somit zum Innenraum bzw. zum Luftvolumen im Innenraum thermisch gekoppelt.

Die Vorspanneinrichtung spannt das Steckgehäuse in entgegengesetzter Richtung zur Einsteckrichtung (Montagerichtung) vor, so dass korrespondierende und sich gegenseitig blockierende Rastflächen, Rastkanten o.dgl. Verrastungen in Anlage miteinander gelangen und damit die Einsteckposition des Steckgehäuses in der Aufnahmeeinrichtung definieren.

Durch die Vorspanneinrichtung ist die Position des den Innenraumtemperatursensor aufweisenden Einsteckendes des Steckgehäuses eindeutig definiert. Insbesondere wird durch die Vorspanneinrichtung ferner verhindert, dass das Steckgehäuse im montierten Zustand mit Spiel und damit insoweit "lose" von der Aufnahmeeinrichtung aufgenommen ist.

Für die Einnahme der exakten Position des Innenraumtemperatursensors im Einbauzustand der Vorrichtung ist erfindungsgemäß vorgesehen, dass das Steckgehäuse an seinen dem Einsteckende abgewandten hinteren Ende ein Verschlusselement, insbesondere einen Steckerkorb zur Aufnahme eines Steckers für den elektrischen Anschluss, aufweist und das Verschlusselement eine Vorspanneinrichtung zum Vorspannen der Leiterkarte in Richtung auf das Einsteckende des Steckgehäuses aufweist, und dass die Vorspanneinrichtung des Verschlusselements mindestens eine Federzunge zur elastischen Anlage an dem hinteren Ende der Leiterkarte aufweist. Hierdurch wird die Position der Leiterkarte und damit des Innenraumtemperatursensors relativ zum Steckgehäuse und deren Position relativ zur Aufnahmeeinrichtung definiert eingenommen.

In zweckmäßiger Ausgestaltung der Erfindung ist vorgesehen, dass die Vorspanneinrichtung an der Aufnahmeeinrichtung und/oder an dem Steckgehäuse angeordnet ist und mindestens ein Federelement aufweist, das bei Anlage an der Aufnahmeeinrichtung eine Andrückkraft auf das Steckgehäuse zur Definition der Einstecktiefe des Einsteckendes des Steckgehäuses in den Aufnahmeraum der Aufnahmeeinrichtung ausübt.

Die Vorspanneinrichtung kann auf unterschiedliche Art und Weise ausgebildet sein. Sie weist in jedem Fall mindestens ein rückstellfähiges Vorspann- bzw. Federelement auf, das beispielsweise als Schraubendruckfeder oder als Bügeloder Blattfeder oder als Federzunge oder als elastisch komprimierbares Element oder als reversibel elastisch verformbares Element ausgebildet sein kann.

Bei einer vorteilhaften Weiterbildung der Erfindung weist die Vorspanneinrichtung zwei an dem Einsteckende des Steckgehäuses beidseitig des Innenraumtemperatursensors angeordnete Federelemente zur elastischen Anlage an dem Abdeckelement beidseitig von dessen Durchgangsöffnung auf. Die Anordnung der Federelemente beidseitig des Innenraumtemperatursensors bzw. der Durchgangsöffnung im Abdeckelement führt zu einer verkippsicheren Positionierung des Einsteckendes des Steckgehäuses im Aufnahmeraum der Aufnahmeeinrichtung. Zur weiteren Verkippsicherung in der weiteren Dimension (beispielsweise in X- und in Y-Ebene, wenn die Z-Richtung dieses derart definierten Koordinatensystems die Achse der Einsteckrichtung definiert) kann es von Vorteil sein, zwei Paare von jeweils beidseitig des Innenraumtemperatursensors angeordneten Federelementen vorzusehen, wobei die beiden Federelementpaare um 90° gegeneinander versetzt angeordnet sind.

In vorteilhafter Weiterbildung der Erfindung kann ferner vorgesehen sein, dass jedes Federelement als Federbügel ausgebildet ist, der gekrümmt ist und eine konvexe sowie eine konkave Seite aufweist, und dass bei elastischer Anlage an dem Abdeckelement und bei Verrastung des Steckgehäuses mit der Aufnahmeeinrichtung die Federbügel mit ihren konkaven Seiten zum Abdeckelement weisend angeordnet sind. Wie bereits oben beschrieben, können die zuvor definierten Federelemente entweder an der Innenseite (Rückseite) des Abdeckelements und/oder an dem Einsteckende des Steckgehäuses angeordnet sein.

Bei einer weiteren Ausgestaltung der Erfindung wird der Aufnahmeraum der Aufnahmeeinrichtung neben dem Abdeckelement, das diesen Aufnahmeraum zum Innenraum des Fahrzeugs begrenzt (mit Ausnahme der Durchgangsöffnung, die den Aufnahmeraum insoweit mit dem Innenraum des Fahrzeugs verbindet), ferner durch einen von der Rückseite des Abdeckelements abstehenden Kragen gebildet sein, der entweder durchgehend oder aber unterbrochen verläuft. Dieser Kragen umschließt das Einsteckende des Steckgehäuses, wenn dieses mit der Aufnahmeeinrichtung verrastet ist.

Als Material für das Steckgehäuse, die Rasteinrichtung, die Aufnahmeeinrichtung und die Vorspanneinrichtung hat sich Kunststoffmaterial bewährt, so dass die zuvor genannten Elemente bzw. Komponenten der erfindungsgemäßen Vorrichtung aus diesem Material bestehen bzw. dieses Material aufweisen.

In weiterer zweckmäßiger Ausgestaltung der Erfindung ist der Innenraumtemperatursensor in einem Sensorgehäuse angeordnet oder in Material eines Sensorgehäuses eingebettet ist, wobei das Sensorgehäuse zumindest teilweise über das Einsteckende des Steckgehäuses vorsteht.

Das zuvor genannte Sensorgehäuse weist das Sensorgehäuse eine an den Innenraum angrenzende Vorderwand auf, wobei der Innenraumtemperatursensor mit der Vorderwand des Sensorgehäuses thermisch gekoppelt ist. Hierbei kann insbesondere in dem Sensorgehäuse ein Strahlungssensor (beispielsweise in Form einer Fotodiode mit oder ohne optischem Filter) zum Empfang von insbesondere Sonnenstrahlung zur Kompensation einer von der Innenraumtemperatur erfassten Erwärmung des Sensorgehäuses durch Strahlung, der das Sensorgehäuse ausgesetzt ist, vorgesehen sein. Dabei kann ferner in dem Steckgehäuse ein zweiter Temperatursensor zur Erfassung einer parasitären Erwärmung des Steckgehäuses und/oder des Sensorgehäuses zwecks Kompensation ihrer Auswirkungen auf die Temperaturerfassung durch den Innenraumtemperatursensor angeordnet sein.

Neben dem Innenraumtemperatursensor und den gegebenenfalls vorhandenen elektrischen bzw. elektronischen Komponenten wie dem Strahlungssensor und dem zweiten Temperatursensor weist die erfindungsgemäße Vorrichtung typischerweise auch noch weitere elektrische bzw. elektronische Bauteile auf, die der Verarbeitung der Messsignale dienen. Diese Komponenten bzw. Bauteile sind typischerweise auf einer Leiterkarte angeordnet, die sich in dem Steckgehäuse befindet und ein dem Einsteckende des Steckgehäuses zugewandtes vorderes Ende aufweist, wobei das Steckgehäuse an seinem Einsteckende eine Durchgangsöffnung aufweist, durch die hindurch der Innenraumtemperatursensor ragt und über das Einsteckende des Steckgehäuses vorsteht.

Wie bereits oben beschrieben, dient die Vorspanneinrichtung erfindungsgemäß der Einnahme einer definierten Position des Steckgehäuses bei dessen Verrastung mit der Aufnahmeeinrichtung. Typischerweise und als vorteilhafte Weiterbildung der Erfindung weist die Rasteinrichtung mindestens ein Paar miteinander zusammenwirkender, winklig, insbesondere rechtwinklig zur Einsteckrichtung verlaufender Rastflächen auf, wobei die eine Rastfläche an dem Steckgehäuse, insbesondere an dem Einsteckende des Steckgehäuses und die andere Rastfläche an der Aufnahmeeinrichtung, insbesondere an einem den Aufnahmeraum der Aufnahmeeinrichtung zumindest auch definierenden, von dem Abdeckelement abstehenden Kragen angeordnet ist und wobei das Steckgehäuse nach dem Vorbeibewegen seiner Rastfläche beim Einstecken in die Aufnahmeeinrichtung an deren Rastfläche vorbei und unter Erzeugung einer Vorspannkraft bzw. einer weiteren Vorspannkraft durch die Vorspanneinrichtung weiter in Einsteckrichtung bis zur Blockade durch das Abdeckelement vorbewegbar ist und auf Grund der Vorspannkraft der Vorspanneinrichtung bis zur Anlage der Rastfläche des Steckgehäuses an der Rastfläche der Aufnahmeeinrichtung automatisch zurückbewegbar ist.

Die Erfindung wird nachfolgend anhand eines Ausführungsbeispiels und unter Bezugnahme auf die Zeichnung näher erläutert. Im Einzelnen zeigen dabei:
- Fig. 1: perspektivisch und in Explosionsdarstellung die einzelnen Komponenten einer Vorrichtung zum Messen der Temperatur in dem Innenraum eines Fahrzeugs gemäß einem Ausführungsbeispiel der Erfindung,
- Fig. 2: die Einzelkomponenten gemäß Fig. 1 in Explosionsdarstellung und in Seitenansicht,
- Fig. 3: perspektivisch das Steckgehäuse der Vorrichtung mit am Einsteckende angeordneter Vorspanneinrichtung und mit der Leiterkarte sowie dem Steckerkorb, der eine Vorspanneinrichtung für die Leiterkarte aufweist
- Fig. 4: eine perspektivische Darstellung der Situation, in der das Steckgehäuse (mit in diesem in der vorgeschriebenen Position befindlicher Leiterkarte) über die durch die Rasteinrichtung definierte Einstecktiefe hinaus in die Aufnahmeeinrichtung des Abdeckelements eingesteckt ist,
- Fig. 5: die Situation, in der das Steckgehäuse auf Grund der Vorspanneinrichtung entgegengesetzt zur Einsteckrichtung bis in die durch die Rasteinrichtung definierte Einstecktiefe zurückbewegt ist, und
- Fign.6 und 7: Schnittdarstellungen entlang der Linien VI-VI und VII-VII der Fig. 5.

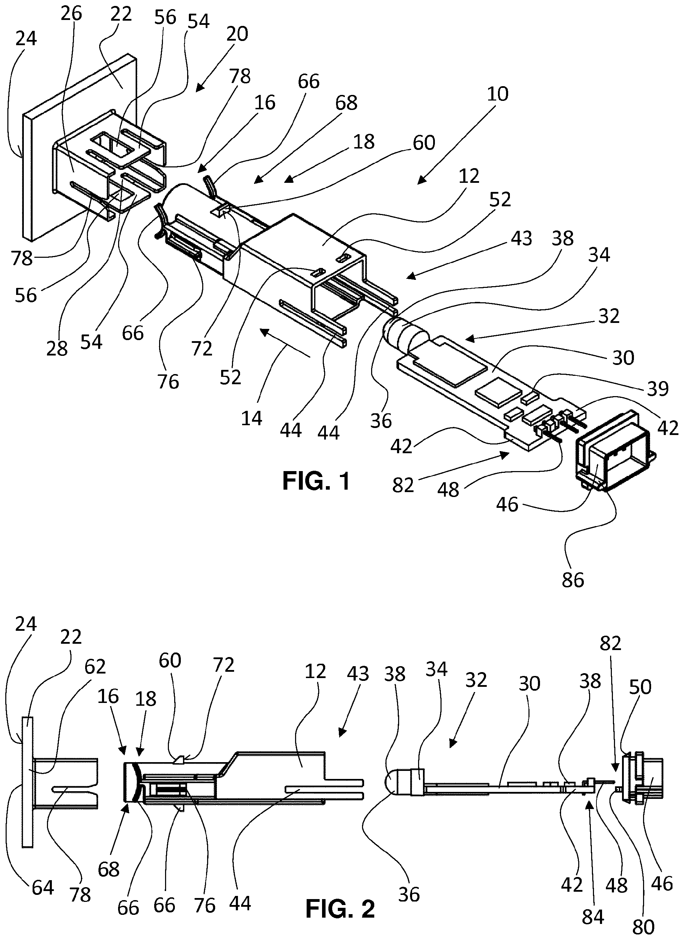

Die Fign. 1 und 2 zeigen perspektivisch und in Seitenansicht die Komponenten einer Vorrichtung 10 zum Messen der Temperatur in dem Innenraum eines Fahrzeugs. Die Vorrichtung 10 umfasst ein Steckgehäuse 12, das ein in Einsteckrichtung 14 vorderes Einsteckende 16 mit einer Vorspanneinrichtung 18 aufweist, die aktiviert ist und eine Vorspannkraft in zur Einsteckrichtung 14 entgegengesetzte Richtung erzeugt, wenn das Steckgehäuse 12 in eine Aufnahmeeinrichtung 20 eines Abdeckelements 22 eingesteckt ist. Das Abdeckelement 22 kann Teil der Instrumententafel oder der Mittelkonsole oder des Dachknotens im Innenraum eines Fahrzeugs oder aber als Element mit den zuvor genannten Komponenten verbunden sein. Die Vorderseite 24 des Abdeckelements 22 grenzt also an den Innenraum an. Die Aufnahmeeinrichtung 20 weist einen mehrfach geschlitzten umlaufenden Kragen 26 auf, der zusammen mit dem Abdeckelement 22 einen Aufnahmeraum 28 für das Einsteckende 16 des Steckgehäuses 12 definiert.

Von dem Steckgehäuse 12 aufgenommen ist eine Leiterkarte 30, die an ihrem im aufgenommenen Zustand dem Einsteckende 16 zugewandten vorderen Ende 32 ein über dieses überstehendes Sensorgehäuse 34 aufweist. Das Sensorgehäuse 34 besteht beispielsweise aus Kunststoffmaterial. In das Kunststoffmaterial des Sensorgehäuses 34 eingebettet sind in diesem Ausführungsbeispiel ein Innenraumtemperatursensor 36 sowie ein Strahlungssensor 38. Auf der Leiterkarte 30 kann noch ein weiterer Temperatursensor 39 angeordnet sein. Das Zusammenwirken all dieser Sensoren und Fühler zwecks Ermittlung eines die Temperatur im Innenraum des Fahrzeuges repräsentierenden Werts ist bei unbelüfteten Innenraumtemperatursystemen grundsätzlich bekannt und soll an dieser Stelle daher nicht weiter ausgeführt werden. Die Leiterkarte 30 kann weitere Elektronik aufweisen, wie z.B. eine Bus-Schnittstelle (z.B. LIN oder CAN), um über einen Kommunikationsbus der Klimaregelungselektronik die Innenraumtemperatur repräsentierende Daten/Signale zu liefern.

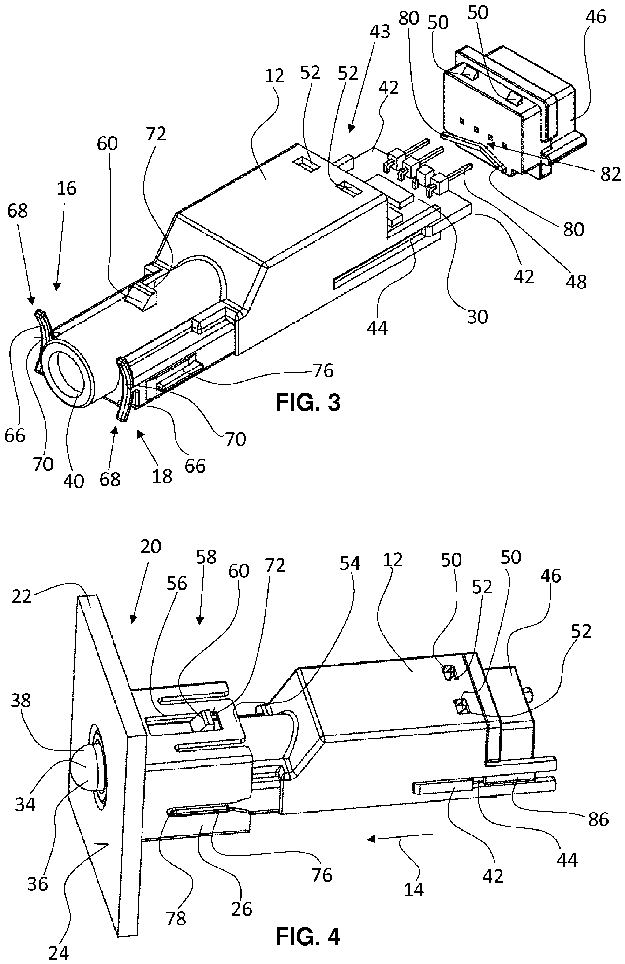

Der über das vordere Ende 32 der Leiterkarte 30 überstehende Innenraumtemperatursensor 36 ragt durch eine Durchgangsöffnung 40 am Einsteckende 16 des Steckgehäuses 12 hindurch (siehe beispielsweise Fig. 3).

Die Positionierung der Leiterkarte 30 innerhalb des Steckgehäuses 12 kann beispielsweise durch seitliche Führungsvorsprünge 42 realisiert sein, die in Aufnahmeschlitze 44 an den Seitenwänden des Steckgehäuses 12 eingeführt sind. Das dem Einsteckende 16 gegenüberliegende hintere Ende 43 des Steckgehäuses 12 ist in diesem Ausführungsbeispiel durch einen Steckerkorb 46 verschlossen, durch den sich hindurch Anschlussstifte 48 der Leiterkarte 30 erstrecken. Der Steckerkorb 46 kann beispielsweise rastend mit dem Steckgehäuse 12 verbunden sein (siehe die Rastnasen 50, die in Rastaussparungen 52 am hinteren Ende 43 des Steckgehäuses 12 eingetaucht sind). Zur Reduktion der Einbautiefe der Vorrichtung 10 bei von dem Steckerkorb 46 aufgenommenem (nicht dargestellten) Stecker kann der Steckerkorb 46 abgewinkelt sein.

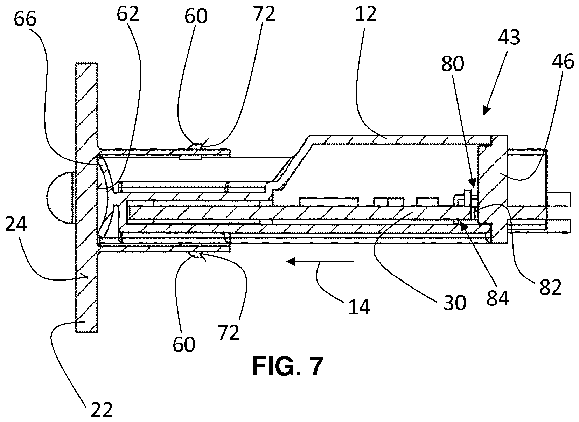

Wie anhand insbesondere der Fign. 1 und 2 zu erkennen ist, weist die Aufnahmeeinrichtung 20 an ihrem Kragen 26 zwei einander gegenüberliegende Rastlaschen 54 auf, die jeweils eine Rastausnehmung 56 begrenzen. Die Rastlaschen 54 wirken als Rasteinrichtung 58 mit Rasthaken 60 auf einander gegenüberliegenden Seiten des Einsteckendes 16 des Steckgehäuses 12 zusammen. Dies ist in den Fign. 4 bis 7 verdeutlicht.

Beim Einstecken des Einsteckendes 16 in den Aufnahmeraum 28 der Aufnahmeeinrichtung 20 gelangt die Vorspanneinrichtung 18 in Kontakt mit der Innenseite 62 des Abdeckelements 22 innerhalb des Aufnahmeraums 28. An der Innenseite 62 innerhalb des Aufnahmeraums 28 ist das Abdeckelement 22 mit einer Durchgangsöffnung 64 versehen, die der Aufnahme und der Durchführung des Sensorgehäuses 34 dient, welches seinerseits über die Durchgangsöffnung 40 am Einsteckende 16 des Steckgehäuses 12 übersteht (siehe Fig. 3). Die Vorspanneinrichtung 18 ist in diesem Ausführungsbeispiel in Form zweier gekrümmter Federbügel 66 ausgebildet, die insoweit Federelement 68 der Vorspanneinrichtung 18 bilden. Die Federbügel 66 sind in Einsteckrichtung 14 vorgewölbt, weisen also in Einsteckrichtung 14 weisende konkave Seiten 70 auf. Sobald diese Federbügel 66 gegen das Abdeckelement 22 drücken, werden sie gestreckt, wodurch sie eine Vorspannkraft entgegengesetzt zur Einsteckrichtung 14 erzeugen.

Beim Einführen des Einsteckendes 16 in die Aufnahmeeinrichtung 20 bewegen sich die Rasthaken 60 an den Rastlaschen 54 der Rasteinrichtung 58 vorbei. Die Rasthaken 60 weisen im Wesentlichen rechtwinklig zur Einsteckrichtung 14 verlaufende Rastflächen 72 auf, die mit den Kanten an den dem Abdeckelement 22 abgewandten Enden der Rastausnehmungen 56 zusammenwirken. Diese Kanten der Rastausnehmungen 56 bilden also Rastflächen 74 an der Aufnahmeeinrichtung 20, die, wie die Rastflächen 72 der Rasthaken 60 rechtwinklig zur Einsteckrichtung 14 verlaufen. Anstelle einer rechtwinkligen Ausrichtung der zuvor beschriebenen Rastflächen können diese auch zur Verstärkung der Verrastung spitzwinklig zur Einsteckrichtung 14 verlaufen und somit nach einem Widerhakenprinzip zusammenwirken.

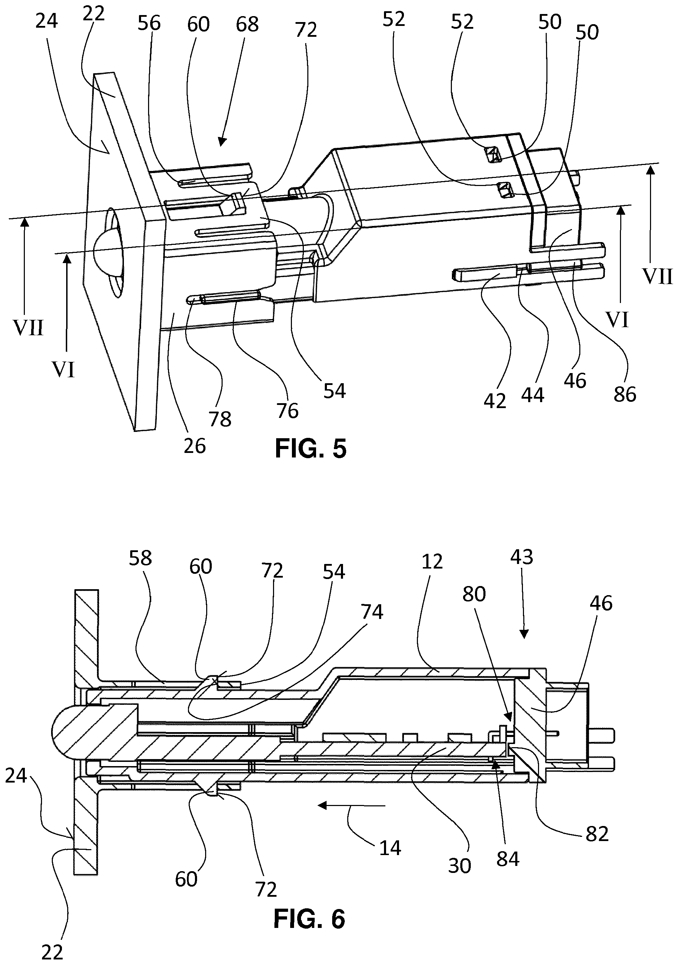

In Fig. 4 ist die Situation gezeigt, in der das Steckgehäuse 12 so weit in die Aufnahmeeinrichtung 20 eingeführt ist, dass die Rasthaken 60 an den dem Abdeckelement 22 abgewandten hinteren Enden der Rastausnehmungen 56 vorbeibewegt sind. Die Federbügel 66 sind gespannt (d.h. gestreckt) und bewegen nun das Steckgehäuse 12 automatisch entgegengesetzt zur Einsteckrichtung 14 zurück, wenn das Steckgehäuse 12 bei manueller Montage losgelassen wird oder aber bei automatischer Montage nicht mehr im Eingriff mit dem Montagewerkzeug steht. Das Steckgehäuse 12 nimmt dann selbsttätig die Position gemäß Fig. 5 an, die in Fig. 6 im Schnitt gezeigt ist. Die korrespondierenden Rastflächen 72, 74 der Rasteinrichtung 58 liegen aneinander an und definieren damit die Einstecktiefe und die Einsteckposition des Steckgehäuses 12. Das Sensorgehäuse 34 weist nun die vorgeschriebene Positionierung auf.

Wie anhand der Figuren zu erkennen ist, kann das Einsteckende 16 in der Aufnahmeeinrichtung 20 mit Hilfe von seitlichen Rippen 76 geführt sein, die in diesem Ausführungsbeispiel der mechanischen Kodierung dienen können. Diese seitlichen Rippen 76 sind in unterschiedlichen Höhen beidseitig des Einsteckendes 16 des Steckgehäuses 12 angeordnet und werden von Aufnahmeschlitzen 78 am Kragen 26 der Aufnahmeeinrichtung 20 aufgenommen. Eine versehentlich fehlerhafte, gegenüber der Darstellung in den Figuren um 180° verdrehte (also insoweit umgekehrte) Ausrichtung des Steckgehäuses 12 bei der Montage wird somit erkannt, was Montagefehler reduziert.

Innerhalb des Steckgehäuses 12 nimmt die Leiterkarte 30 eine durch Anschlagflächen von Leiterkarte 30 und Steckgehäuse 12 definierte Position ein, was durch Federzungen 80 einer Vorspanneinrichtung 82 am Steckerkorb 46 unterstützt wird, die unter Erzeugung einer auf die Leiterkarte 30 einwirkenden Vorspannung gegen das hintere Ende 84 der Leiterkarte 30 drücken. Die Leiterkarte 30 liegt dabei z.B. mit ihren Führungsvorsprüngen 42 an dem vorderen (geschlossenen) Ende der Aufnahmeschlitze 44 des Steckgehäuses 12 an (siehe die Fign. 4 und 5). In den Aufnahmeschlitzen 44 können auch seitliche Führungsvorsprünge 86 an dem Steckerkorb 46 geführt sein. Somit nimmt der über das vordere Ende 32 der Leiterkarte 30 vorstehende Innenraumtemperatursensor 36 sowie der Strahlungssensor 38, die ihrerseits definiert im Sensorgehäuse 34 angeordnet sind, innerhalb der Durchgangsöffnung 64 des Steckgehäuses 12 und dieses innerhalb der Aufnahmeeinrichtung 20 jeweils die für die Funktionalität der Vorrichtung 10 vorgeschriebene Position ein.

### BEZUGSZEICHENLISTE

- 10: Vorrichtung
- 12: Steckgehäuse
- 14: Einsteckrichtung
- 16: Einsteckende
- 18: Vorspanneinrichtung
- 20: Aufnahmeeinrichtung
- 22: Abdeckelement
- 24: Vorderseite
- 26: Kragen
- 28: Aufnahmeraum
- 30: Leiterkarte
- 32: vorderes Ende der Leiterkarte
- 34: Sensorgehäuse
- 36: Innenraumtemperatursensor
- 38: Strahlungssensor
- 39: Temperatursensor
- 40: Durchgangsöffnung
- 42: Führungsvorsprünge an der Leiterkarte
- 43: hinteres Ende des Steckgehäuses
- 44: Aufnahmeschlitze
- 46: Steckerkorb
- 48: Anschlussstifte
- 54: Rastlaschen
- 56: Rastausnehmung
- 58: Rasteinrichtung
- 60: Rasthaken
- 62: Innenseite
- 64: Durchgangsöffnung
- 66: Federbügel
- 68: Federelement
- 70: konkave Seiten der Federbügel
- 72: Rastflächen an dem Steckgehäuse/Einsteckende
- 74: Rastflächen an der Aufnahmeeinrichtung
- 76: Rippen
- 78: Aufnahmeschlitze
- 80: Federzungen
- 82: Vorspanneinrichtung am Steckerkorb
- 84: hinteres Ende der Leiterkarte
- 86: Führungsvorsprünge am Steckerkorb

## Patentansprüche

1. Vorrichtung zum Messen der Temperatur in dem Innenraum eines Fahrzeugs, mit
- einer Aufnahmeeinrichtung (20) an der Rückseite eines an den Innenraum angrenzenden Abdeckelements (22),
- einem Steckgehäuse (12) zum Einstecken in die Aufnahmeeinrichtung (20),
- wobei die Aufnahmeeinrichtung (20) einen Aufnahmeraum (28) und das Abdeckelement (22) innerhalb des Aufnahmeraums (28) eine Durchgangsöffnung und das Steckgehäuse (12) ein Einsteckende (16) zum Einstecken in die Aufnahmeeinrichtung (20) aufweist,
- einer Rasteinrichtung (58) zum verrasteten Verbinden des Steckgehäuses (12) mit der Aufnahmeeinrichtung (20) bei in deren Aufnahmeraum (28) eingestecktem Einsteckende (16) des Steckgehäuses (12),
- einem an und/oder in dem Einsteckende (16) des Steckgehäuses (12) angeordneten Innenraumtemperatursensor (36),
- wobei der Innenraumtemperatursensor (36) über das Einsteckende (16) des Steckgehäuses (12) übersteht, und
- einer Vorspanneinrichtung (18) zum Vorspannen des Steckgehäuses (12) von dem Abdeckelement (22) weg gerichtet zwecks Einnahme einer definierten Einsteckposition des Steckgehäuses (12), wenn das Einsteckende (16) des Steckgehäuses (12) bei Verrastung mit der Aufnahmeeinrichtung (20) in deren Aufnahmeraum (28) eingesteckt und der Innenraumtemperatursensor (36) in der Durchgangsöffnung des Abdeckelements (22) angeordnet ist
**gekennzeichnet durch**
- eine in dem Steckgehäuse (12) angeordnete Leiterkarte (30) mit einem dem Einsteckende (16) des Steckgehäuses (12) zugewandten vorderen Ende, wobei die Leiterkarte (30) den Innenraumtemperatursensor (36) zumindest teilweise über ihr vorderes Ende überstehend und gegebenenfalls weitere Bauelemente trägt sowie Leiterbahnen aufweist und wobei das Steckgehäuse (12) an seinem Einsteckende (16) eine Durchgangsöffnung aufweist, durch die hindurch der Innenraumtemperatursensor (36) ragt und über das Einsteckende (16) des Steckgehäuses (12) vorsteht,
- wobei das Steckgehäuse (12) an seinen dem Einsteckende (16) abgewandten hinteren Ende ein Verschlusselement zur Aufnahme eines Steckers für den elektrischen Anschluss, aufweist und das Verschlusselement eine Vorspanneinrichtung (82) zum Vorspannen der Leiterkarte (30) in Richtung auf das Einsteckende (16) des Steckgehäuses (12) aufweist.

2. Vorrichtung nach Anspruch 1, **dadurch gekennzeichnet, dass** das Verschlusselement ein Steckerkorb (46) ist.

3. Vorrichtung nach Anspruch 1 oder 2, **dadurch gekennzeichnet, dass** die Vorspanneinrichtung (82) des Verschlusselements mindestens eine Federzunge (80) zur elastischen Anlage an dem hinteren Ende (84) der Leiterkarte (30) aufweist.

4. Vorrichtung nach einem der Ansprüche 1 bis 3, **dadurch gekennzeichnet, dass** die Vorspanneinrichtung (18) an der Aufnahmeeinrichtung (20) und/oder an dem Steckgehäuse (12) angeordnet ist und mindestens ein Federelement (68) aufweist, das bei Anlage an der Aufnahmeeinrichtung (20) eine Andrückkraft auf das Steckgehäuse (12) zur Definition der Einstecktiefe des Einsteckendes (16) des Steckgehäuses (12) in den Aufnahmeraum (28) der Aufnahmeeinrichtung (20) ausübt.

5. Vorrichtung nach Anspruch 4, **dadurch gekennzeichnet, dass** das mindestens eine Federelement (68) als Schraubendruckfeder oder als Bügeloder Blattfeder oder als Federzunge oder als elastisch komprimierbares Element oder als reversibel elastisch verformbares Element ausgebildet ist.

6. Vorrichtung nach einem der Ansprüche 1 bis 5, **dadurch gekennzeichnet, dass** die Vorspanneinrichtung (18) zwei an dem Einsteckende (16) des Steckgehäuses (12) beidseitig des Innenraumtemperatursensors (36) angeordnete Federelemente zur elastischen Anlage an dem Abdeckelement (22) beidseitig von dessen Durchgangsöffnung aufweist.

7. Vorrichtung nach Anspruch 6, **dadurch gekennzeichnet, dass** jedes Federelement (68) als Federbügel (66) ausgebildet ist, der gekrümmt ist und eine konvexe sowie eine konkave Seite (70) aufweist, und dass bei elastischer Anlage an dem Abdeckelement (22) und bei Verrastung des Steckgehäuses (12) mit der Aufnahmeeinrichtung (20) die Federbügel (66) mit ihren konkaven Seiten zum Abdeckelement (22) weisend angeordnet sind.

8. Vorrichtung nach einem der Ansprüche 1 bis 7, **dadurch gekennzeichnet, dass** die Aufnahmeeinrichtung (20) einen durchgehend verlaufenen oder unterbrochenen, vom Abdeckelement (22) abstehenden Kragen (26) aufweist, der zusammen mit dem Abdeckelement (22) den Aufnahmeraum (28) der Aufnahmeeinrichtung (20) definiert.

9. Vorrichtung nach einem der Ansprüche 1 bis 8, **dadurch gekennzeichnet, dass** das Steckgehäuse (12), die Rasteinrichtung, die Aufnahmeeinrichtung (20) und die Vorspanneinrichtung (18) aus Kunststoffmaterial besteht oder Kunststoffmaterial aufweist.

10. Vorrichtung nach einem der Ansprüche 1 bis 9, **dadurch gekennzeichnet, dass** der Innenraumtemperatursensor (36) in einem Sensorgehäuse (34) angeordnet oder in Material eines Sensorgehäuses (34) eingebettet ist und dass das Sensorgehäuse (34) zumindest teilweise über das Einsteckende (16) des Steckgehäuses (12) vorsteht.

11. Vorrichtung nach Anspruch 10, **dadurch gekennzeichnet, dass** das Sensorgehäuse (34) eine an den Innenraum angrenzende Vorderwand aufweist, wobei der Innenraumtemperatursensor (36) mit der Vorderwand des Sensorgehäuses (34) thermisch gekoppelt ist, und/oder dass ein Strahlungssensor (38) zum Empfang von Sonnenstrahlung zur Kompensation einer von der Innenraumtemperatur erfassten Erwärmung des Sensorgehäuses (34) durch Strahlung, der das Sensorgehäuse (34) ausgesetzt ist, vorgesehen ist, und/oder dass in dem Steckgehäuse (12) ein zweiter Temperatursensor (39) zur Erfassung einer parasitären Erwärmung des Steckgehäuses (12) und/oder des Sensorgehäuses (34) zwecks Kompensation ihrer Auswirkungen auf die Temperaturerfassung durch den Innenraumtemperatursensor (36) angeordnet ist.

12. Vorrichtung nach einem der Ansprüche 1 bis 11, **dadurch gekennzeichnet, dass** die Rasteinrichtung (58) mindestens ein Paar miteinander zusammenwirkender, winklig zur Einsteckrichtung (14) verlaufender Rastflächen aufweist, wobei die eine Rastfläche an dem Steckgehäuse (12) und die andere Rastfläche an der Aufnahmeeinrichtung (20)angeordnet ist und wobei das Steckgehäuse (12) nach dem Vorbeibewegen seiner Rastfläche beim Einstecken in die Aufnahmeeinrichtung (20) an deren Rastfläche vorbei und unter Erzeugung einer Vorspannkraft oder einer weiteren Vorspannkraft durch die Vorspanneinrichtung (18) weiter in Einsteckrichtung (14) bis zur Blockade durch das Abdeckelement (22) vorbewegbar ist und auf Grund der Vorspannkraft der Vorspanneinrichtung (18) bis zur Anlage der Rastfläche des Steckgehäuses (12) an der Rastfläche der Aufnahmeeinrichtung (20) automatisch zurückbewegbar ist.

13. Vorrichtung nach Anspruch 12, **dadurch gekennzeichnet, dass** die Rastflächen der Rasteinrichtung (58) rechtwinklig zur Einsteckrichtung (14) verlaufen und/oder dass die Einrastfläche an dem Einsteckende (16) des Steckergehäuses (12) und die andere Rastfläche an einem den Aufnahmeraum (28) der Aufnahmeeinrichtung (20) zumindest auch definierenden, von dem Abdeckelement (22) abstehenden Kragen (26) angeordnet ist.

## Claims

1. A device for measuring the temperature in the interior of a vehicle, comprising:
- a receiving means (20) on the rear side of a cover element (22) which is arranged adjacent to the interior,
- a plug-in housing (12) for plugging into the receiving means (20),
- wherein the receiving means (20) comprises a receiving space (28), and the cover element (22) inside the receiving space (28) comprises a through-going opening, and the plug-in housing (12) comprises a plug-in end (16) for plugging into the receiving means (20),
- a locking means (58) for lockingly connecting the plug-in housing (12) to the receiving means (20) with the plug-in end (16) of the plug-in housing (12) being plugged into the receiving space (28),
- an interior temperature sensor (36) arranged at and/or in the plug-in end (16) of the plug-in housing (12),
- wherein the interior temperature sensor (36) projects beyond the plug-in end (16) of the plug-in housing (12), and
- a biasing means (18) for biasing the plug-in housing (12) away from the cover element (22) for assuming a defined plug-in position of the plug-in housing (12) when the plug-in end (16) of the plug-in housing (12) is plugged into the receiving space (28) when being locked with the receiving means (20), and the interior temperature sensor (36) is arranged in the through-going opening of the cover element (22),
**characterized by**
- a circuit board (30) arranged in the plug-in housing (12) and having a front end facing the plug-in end (16) of the plug-in housing (12), wherein the circuit board (30) carries the interior temperature sensor (36) at least partially projecting beyond the front end thereof and possibly further components as well as conductor traces, and wherein the plug-in housing (12) comprises at its plug-in end (16) a through-going opening through which the interior temperature sensor (36) extends and projects beyond the plug-in end (16) of the plug-in housing (12),
- wherein the plug-in housing (12) comprises at its rear end facing away from the plug-in end (16) a closing element for receiving a plug for the electric connection, and the closing element comprises a biasing means (82) for biasing the circuit board (30) towards the plug-in end (16) of the plug-in housing (12).

2. The device according to claim 1, **characterized in that** the closing element is a plug cage (46).

3. The device according to claim 1 or 2, **characterized in that** the biasing means (82) of the closing element comprises at least one spring tongue (80) for elastically abutting on the rear end (84) of the circuit board (30).

4. The device according to any one of claims 1 to 3, **characterized in that** the biasing means (18) is arranged at the receiving means (20) and/or at the plug-in housing (12) and comprises at least one spring element (68) which, when abutting on the receiving means (20), exerts a pressing force on the plug-in housing (12) for defining the plug-in depth of the plug-in end (16) of the plug-in housing (12) in the receiving space (28) of the receiving means (20).

5. The device according to claim 4, **characterized in that** the at least one spring element (68) is configured as a helical pressure spring or as a yoke or leaf spring or as a spring tongue or as an elastically compressible element or as a reversibly elastically deformable element.

6. The device according to any one of claims 1 to 5, **characterized in that** the biasing means (18) comprises two spring elements arranged at the plug-in end (16) of the plug-in housing (12) on both sides of the interior temperature sensor (36) for elastically abutting on the cover element (22) on both sides of the through-going opening thereof.

7. The device according to claim 6, **characterized in that** each spring element (68) is configured as a spring clip (66) which is bent and comprises a convex as well as a concave side (70), and that in the case of elastic abutment of the cover element (22) and locking of the plug-in housing (12) with the receiving means (20) the concave sides of the spring clips (66) are arranged such that they face the cover element (22).

8. The device according to any one of claims 1 to 7, **characterized in that** the receiving means (20) comprises a continuous or discontinuous collar (26) projecting from the cover element (22), which, together with the cover element (22), defines the receiving space (28) of the receiving means (20).

9. The device according to any one of claims 1 to 8, **characterized in that** the plug-in housing (12), the locking means, the receiving means (20), and the biasing means (18) are made from a plastic material or comprise a plastic material.

10. The device according to any one of claims 1 to 9, **characterized in that** the interior temperature sensor (36) is arranged in a sensor housing (34) or embedded in the material of a sensor housing (34), and that the sensor housing (34) at least partially projects beyond the plug-in end (16) of the plug-in housing (12).

11. The device according to claim 10, **characterized in that** the sensor housing (34) comprises a front wall adjacent to the interior, wherein the interior temperature sensor (36) is thermally coupled to the front wall of the sensor housing (34), and/or that a radiation sensor (38) is provided for receiving solar radiation for compensating for heating of the sensor housing (34) sensed by the interior temperature sensor and caused by radiation to which the sensor housing (34) is exposed, and/or that in the plug-in housing (12) a second temperature sensor (39) is arranged for sensing parasitic heating of the plug-in housing (12) and/or the sensor housing (34) for compensating for their effects on the temperature sensing by the interior temperature sensor (36).

12. The device according to any one of claims 1 to 11, **characterized in that** the locking means (58) comprises at least one pair of cooperating locking surfaces extending at an angle to the plug-in direction (14), wherein the one locking surface is arranged at the plug-in housing (12) and the other locking surface is arranged at the receiving means (20), and wherein the plug-in housing (12), after its locking surface, when being plugged into the receiving means (20), has been moved past the locking surface of the latter with a biasing force or a further biasing force being generated by the biasing means (18), is adapted to be further advanced in the plug-in direction (14) until it is blocked by the cover element (22) and is adapted to be automatically moved back due to the biasing force of the biasing means (18) until the locking surface of the plug-in housing (12) abuts on the locking surface of the receiving means (20).

13. The device according to claim 12, **characterized in that** the locking surfaces of the locking means (58) extend perpendicularly to the plug-in direction (14), and/or that the locking surface is arranged at the plug-in end (16) of the plug-in housing (12) and the other locking surface is arranged at a collar (26) at least also defining the receiving space (28) of the receiving means (20) and projecting from the cover element (22).

## Revendications

1. Dispositif pour la mesure de la température dans l'espace intérieur d'un véhicule, doté
- d'un dispositif d'accueil (20) sur la face arrière d'un élément de couverture (22) adjacent à l'espace intérieur,
- d'un boîtier de fiche (12) destiné à l'enfichage dans le dispositif d'accueil (20),
- dans lequel le dispositif d'accueil (20) comporte un espace d'accueil (28) et l'élément de couverture (22) comporte à l'intérieur de l'espace d'accueil (28) une ouverture de passage et le boîtier de fiche (12) comporte une extrémité insérable (16) destinée à s'enficher dans le dispositif d'accueil (20),
- d'un dispositif d'encliquetage (58) destiné à la liaison par emboîtement du boîtier de fiche (12) avec le dispositif d'accueil (20) en cas d'enfichage de l'extrémité enfichable (16) du boîtier de fiche (12) dans l'espace d'accueil (28) du dispositif d'accueil,
- d'un capteur de température intérieure (36) disposé dans et/ou sur l'extrémité enfichable (16) du boîtier de fiche (12),
- dans lequel le capteur de température intérieure (36) dépasse de l'extrémité enfichable (16) du boîtier de fiche (12) et
- d'un dispositif de précontrainte (18) destiné à précontraindre le boîtier de fiche (12) pour l'écarter de l'élément de couverture (12) afin d'adopter une position d'enfichage du boîtier de fiche (12) lorsque l'extrémité enfichable (16) du boîtier de fiche (12) est enfichée dans l'espace d'accueil (28) du dispositif d'accueil (20) en cas d'encliquetage avec le dispositif d'accueil et le capteur de température intérieure (36) est disposé dans l'ouverture de passage de l'élément de couverture (22)
**caractérisé par**
- une carte de circuit imprimé (30) disposée dans le boîtier de fiche (12), avec une extrémité avant tournée vers l'extrémité enfichable (16) du boîtier de fiche (12), dans lequel la carte de circuit imprimé (30) porte le capteur de température intérieure (36) au moins partiellement en saillie sur son extrémité avant et éventuellement d'autres composants et comporte également des pistes conductrices et dans lequel le boîtier de fiche (12) comporte une ouverture de passage à son extrémité enfichable (16), à travers laquelle le capteur de température intérieure (36) s'engage et dépasse au-delà de l'extrémité enfichable (16) du boîtier de fiche (12),
- dans lequel le boîtier de fiche (12) comporte à son extrémité arrière se détournant de l'extrémité enfichable (16) un élément de fermeture destiné à accueillir une fiche pour le raccordement électrique et l'élément de fermeture comporte un dispositif de précontrainte (82) destiné à précontraindre la carte de circuit imprimé (30) en direction de l'extrémité enfichable (16) du boîtier de fiche (12).

2. Dispositif selon la revendication 1, **caractérisé en ce que** l'élément de fermeture est une jupe de connecteur (46).

3. Dispositif selon la revendication 1 ou 2, **caractérisé en ce que** le dispositif de précontrainte (82) de l'élément de fermeture comporte au moins une languette élastique (80) destinée à appuyer de manière élastique sur l'extrémité arrière (84) de la carte de circuit imprimé (30).

4. Dispositif selon l'une des revendications 1 à 3, **caractérisé en ce que** le dispositif de précontrainte (18) est disposé sur le dispositif d'accueil (20) et/ou sur le boîtier de fiche (12) et comporte au moins un élément de ressort (68), lequel exerce en cas d'appui sur le dispositif d'accueil (20) une force de pression sur le boîtier de fiche (12) afin de définir la profondeur d'enfichage de l'extrémité enfichable (16) du boîtier de fiche (12) dans l'espace d'accueil (28) du dispositif d'accueil (20).

5. Dispositif selon la revendication 4, **caractérisé en ce que** l'au moins un élément de ressort (68) est réalisé comme ressort de compression hélicoïdal ou comme ressort à étrier ou à lame ou comme languette élastique ou comme élément élastiquement comprimable ou comme élément déformable de manière élastique et réversible.

6. Dispositif selon l'une des revendications 1 à 5, **caractérisé en ce que** le dispositif de précontrainte (18) comporte deux éléments de ressort disposés sur l'extrémité enfichable (16) du boîtier de fiche (12) des deux côtés du capteur de température intérieure (36), destinés à appuyer de manière élastique sur l'élément de couverture (22) des deux côtés de l'ouverture de passage de ce dernier.

7. Dispositif selon la revendication 6, **caractérisé en ce que** chaque élément de ressort (68) est réalisé comme bride à ressort (66), laquelle est courbée et comporte un côté convexe ainsi qu'un côté concave (70), et **en ce qu'**en cas d'appui élastique sur l'élément de couverture (22) et en cas d'encliquetage du boîtier de fiche (12) avec le dispositif d'accueil (20) les brides à ressort (66) sont disposées avec leur côté concave orienté vers l'élément de couverture (22).

8. Dispositif selon l'une des revendications 1 à 7, **caractérisé en ce que** le dispositif d'accueil (20) comporte un col (26) traversant ou interrompu faisant saillie de l'élément de couverture (22), lequel définit l'espace d'accueil (28) du dispositif d'accueil (20) conjointement avec l'élément de couverture (22).

9. Dispositif selon l'une des revendications 1 à 8, **caractérisé en ce que** le boîtier de fiche (12), le dispositif d'encliquetage, le dispositif d'accueil (20) et le dispositif de précontrainte (18) sont constitués de matière plastique ou comportent de la matière plastique.

10. Dispositif selon l'une des revendications 1 à 9, **caractérisé en ce que** le capteur de température intérieure (36) est disposé dans un boîtier de capteur (34) ou est incorporé dans la matière d'un boîtier de capteur (34) et **en ce que** le boîtier de capteur (34) dépasse au moins partiellement au-delà de l'extrémité enfichable (16) du boîtier de fiche (12).

11. Dispositif selon la revendication 10, **caractérisé en ce que** le boîtier de capteur (34) comporte une paroi avant adjacente à l'espace intérieur, dans lequel le capteur de température intérieure (36) est couplé thermiquement à la paroi avant du boîtier de capteur (34), et/ou **en ce qu'**est prévu un capteur de rayonnement (38) destiné à recevoir un rayonnement solaire afin de compenser un échauffement du boîtier de capteur (34) détecté par la température intérieure, par un rayonnement auquel le boîtier de capteur (34) est exposé, et/ou **en ce qu'**est disposé dans le boîtier de fiche (12) un deuxième capteur de température (39) destiné à détecter un échauffement parasite du boîtier de fiche (12) et/ou du boîtier de capteur (34) afin de compenser ses effets sur la détection de température par le capteur de température intérieure (36).

12. Dispositif selon l'une des revendications 1 à 11, **caractérisé en ce que** le dispositif d'encliquetage (58) comporte au moins une paire de surfaces d'encliquetage coopérant l'une avec l'autre et formant un angle avec la direction d'enfichage (14), dans lequel l'une surface d'encliquetage est disposée sur le boîtier de fiche (12) et l'autre surface d'encliquetage est disposée sur le dispositif d'accueil (20) et dans lequel le boîtier de fiche (12), en cas d'enfichage dans le dispositif d'accueil (20), peut être avancé plus loin dans la direction d'enfichage (14) après que sa surface d'encliquetage est passée devant la surface d'encliquetage du dispositif d'accueil jusqu'au blocage par l'élément de couverture (22) afin d'obtenir une force de précontrainte ou une force de précontrainte supplémentaire par le dispositif de précontrainte (18) et peut être reculé automatiquement jusqu'à ce que la surface d'encliquetage du boîtier de fiche (12) appuie sur la surface d'encliquetage du dispositif d'accueil (20) en raison de la force de précontrainte du dispositif de précontrainte (18).

13. Dispositif selon la revendication 12, **caractérisé en ce que** les surfaces d'encliquetage du dispositif d'encliquetage (58) sont orthogonales à la direction d'enfichage (14) et/ou **en ce que** la surface d'encliquetage est disposée sur l'extrémité enfichable (16) du boîtier de fiche (12) et l'autre surface d'encliquetage est disposé sur un col (26) saillant de l'élément de couverture et définissant au moins également l'espace d'accueil (28) du dispositif d'accueil (20).
